# EUROPÄISCHE PATENTSCHRIFT

(11) **EP 0 859 243 B1**
(45) Veröffentlichungstag und Bekanntmachung des Hinweises auf die Patenterteilung: **27.08.2003**
(21) Anmeldenummer: 97120818.6
(22) Anmeldetag: 27.11.1997
(51) Int. Cl.: G01S 17/74

(54) **Laseridentifikationssystem**
Laser identification system
Système d'identification par laser

(30) Priorität: 18.02.1997 US 38051 P
(43) Veröffentlichungstag der Anmeldung: 19.08.1998
(73) Patentinhaber: OERLIKON CONTRAVES AG, 8050 Zürich (CH)
(72) Erfinder: Gerber, Peter, 8965 Berikon (CH)
(74) Vertreter: OK pat AG

(56) Entgegenhaltungen:
- EP-A- 0 187 086
- DE-A- 2 215 463
- DE-A- 3 113 154
- DE-A- 4 003 960
- US-A- 4 983 021

## Beschreibung

### Hintergrund der Erfindung

Die Erfindung bezieht sich auf ein Identifikationssystem, insbesondere zu militärischen Zwecken und insbesondere auf ein mit Lasern arbeitendes Identifikationssystem nach dem Oberbegriff des Anspruchs **1,** auf ein Lasergerät, eine Zielvorrichtung und ein Gurtsystem für ein Laseridentifikationssystem.

Aus der **DE-22 15 463-A1** ist ein derartiges Laseridentifikationssystem bekannt. Bei diesem System erfolgt die Objekt-Identifizierung, das heisst die Identifizierung der Zielvorrichtung, objektgerichtet in Verbindung mit bekannten optischen Richtmitteln der Waffentechnik durch codierte Laser-Abfragesignale, wobei der Abfrage-Laserstrahl längs der Visierlinie abstrahlbar ist und von Laserstrahl- Empfangs- und Verstärkermitteln mit nachgeordneten Decodiermitteln empfangbar ist. Aus der **DE-31 13 154-A1** ist ein System zur optronischen Eingabe von Laserstrahlung in Geräte der Nachrichtenübermittlung bekannt, bei welchem ebenfalls eine Signalverstärkung vor einer Decodierung vorgesehen ist Diese beiden Systeme sind jedoch den erhöhten Anforderungen, die insbesondere im militärischen Bereich bestehen, nicht gewachsen.

Das Geschehen auf dem Gefechtsfeld wird immer komplexer und vollzieht sich mit zunehmendem Tempo. Entscheidungen müssen in Sekundenbruchteilen gefällt werden, obwohl die Konsequenzen von Fehlern gewaltig sind. Relevante Information muss den Entscheidungsträgern deshalb prägnant und leicht verständlich dargeboten werden, um schnelle und fehlerfreie Entscheidungen zu ermöglichen. Eine der wichtigsten Informationen auf dem Gefechtsfeld betrifft tatsächlich die Feststellung, ob ein Objekt oder eine Person feindlich ist oder nicht.

Sehr fortschrittliche Systeme sind für die Identifikation von Luftfahrzeugen und einigen anderen grossen gefechtsfeldtauglichen Einrichtungen entwickelt worden. Solche Systeme werden als Freund-Feind-Erkennungssysteme bezeichnet. Das Problem der Identifikation einzelner am Gefecht teilnehmender Soldaten ist allerdings bis heute grösstenteils ungelöst geblieben, aber umso drängender, da Konfliktparteien nicht mehr durch die Kleidung der Soldaten und einen klaren Frontverlauf voneinander zu unterscheiden sind. Bodentruppen müssen deshalb mit Systemen ausgerüstet werden, die ihnen vor der Einleitung der Bekämpfung eines Zieles Sicherheit über dessen Identität verschaffen.

Eine ungünstige Konsequenz zunehmender Komplexität von auf dem Gefechtsfeld eingesetzten technischen Systemen ist die zunehmende Belastung des einzelnen Soldaten durch Volumen und Gewicht der mitzuführenden Ausrüstung. So wirkt sich in einigen Fällen das Gewicht der Ausrüstung bereits negativ auf die Verfügbarkeit und Flexibilität des einzelnen Soldaten aus, weshalb ein Freund-Feind-Erkennungssystem die Belastung des Soldaten mit Ausrüstungsgegenständen keinesfalls wesentlich erhöhen darf. Da in modernen Konzepten der Kampfführung Soldaten oft nicht in grösseren Gruppen operieren, muss ein Freund-Feind-Erkennungssystem die Identifizierung nicht nur von Gruppen, sondern auch von einzelnen Soldaten ermöglichen. Tatsächlich bedürfen die einzeln und nicht in Gruppen im Gefechtsfeld verteilten Soldaten am nötigsten des Schutzes vor der Waffeneinwirkung der eigenen Partei. Weiterhin ist heutzutage ein Kampfgeschehen denkbar, in welchem Individuen vieler verschiedener Kulturen, Sprachen und Rassen als Alliierte gegen einen genauso heterogenen Feind kämpfen. Identifikation durch Augenschein oder Sprache beinhaltet somit hohe Risiken. Das Kampfgeschehen im modernen Krieg findet üblicherweise nachts statt und bedingt eine wesentliche zusätzliche Erschwerung der Identifikation durch Augenschein, weiterhin spielt Zeit eine wichtige Rolle. Ein Freund-Feind-Erkennungssystem muss daher die relevante Information extrem schnell darbieten. Für Bodentruppen taugliche Freund-Feind-Erkennungsgeräte müssen daher extreme Empfindlichkeit und Genauigkeit als Eigenschaften in sich vereinen und bequem zu tragen oder zu transportieren sein.

Laser emittieren im allgemeinen einen stark kollimierten quasimonochromatischen Lichtstrahl. Aus verschiedenen Materialien gefertigte Halbleiterlaser erfassen mit ihrer Emission ein vom Ultravioletten bis in den Infrarotbereich reichendes Lichtspektrum. Gegenwärtig erhältliche Laser sind sehr zuverlässig und werden nahezu von Tag zu Tag kleiner und leistungsfähiger. Der Halbleiterchip eines GaAs-Diodenlasers zum Beispiel ist extrem gering in seinen Abmessungen, vergleichbar mit der Grösse eines Stecknadelkopfes (ohne Berücksichtigung der Stromversorgung). Halbleiterlaser können gepulst oder kontinuierlich emittierend ausgeführt werden. Moderne gewinnerzeugende Lasermedien ermöglichen bei entsprechender Speisung die Erzeugung von wenige Nanosekunden kurzen Impulsen mittels eines als kontinuierlich emittierend ausgeführten Lasers.

Im Infrarotbereich emittierende Halbleiterlaser eignen sich in idealer Weise zur Anwendung in Freund-Feind-Erkennungssystemen. Von Infrarot-Diodenlasern emittierte Lichtstrahlen können vom unbewaffneten Auge nicht wahrgenommen werden. Solche Lichtstrahlen sind nur durch den Gebrauch spezieller Sichthilfen auszumachen, wie z. B. Nachtsichtbrillen.

Unter Verwendung einer entsprechend auszuführenden Optik lässt sich das von einer Infrarot-Laserdiode emittierte Licht zu einem scharf gebündelten Strahl kollimieren, welcher sich ideal zur Beleuchtung von Punktzielen eignet. Entsprechend kollimierte Lichtstrahlen aus Infrarot-Laserdioden weisen auf eine Entfernung von 100m einen Strahldurchmesser von etwa 5cm auf, wodurch es möglich ist, nahezu jedes Punktziel sehr genau isoliert zu beleuchten. Weiterhin besteht aufgrund des engen Abstrahlungswinkels der verwendeten Laserstrahlen grosse Sicherheit vor Gegenmassnahmen.

Gegenwärtig kommerziell erhältliche Laserdioden weisen schon einen hervorragenden Wirkungsgrad auf, es werden mehr als 70% der dem Halbleiterlaser zugeführten elektrischen Leistung in Lichtleistung umgesetzt. Laser weisen unter anderem die Besonderheit auf, Licht in Form eines einzelnen, engen und nahezu beugungsbegrenzten Strahls zu emittieren. Im Vergleich hierzu mag eine 100 Watt Glühbirne wesentlich mehr Lichtleistung abstrahlen als ein vergleichweise leistungsschwacher Laser, allerdings ist das vom glühenden Draht abgestrahlte Licht räumlich und zeitlich inkohärent, wodurch es einerseits ein breites optisches Spektrum aufweist, andererseits trotz der relativ grossen Fläche des glühenden Drahtes in einen grossen Raumwinkel abgestrahlt wird.

Eine hochwertige Linse kann das von einem Laser abgestrahlte Licht vollständig erfassen und fast seine gesamte optische Leistung in einen nahezu beugungsbegrenzten Fleck mit einem Durchmesser, welcher sich in der Grössenordnung einiger Mikrometer bewegt, fokussieren. Die optischen Leistungsdichten, welche durch Fokussierung des Lichts eines mässig leistungsstarken kontinuierlich emittierenden Diodenlasers von beispielsweise 25 mW Lichtleistung erzielt werden können, betragen mehr als 50 kW/cm². Zum Vergleich sei die Leistungsdichte an einer Sauerstoff-Acetylen-Flamme genannt, welche ungefähr 1 kW/cm² beträgt.

Ein Freund-Feind-Erkennungssystem benötigt ein sehr gutes Detektionssystem. Die Basis für ein Freund-Feind-Erkennungssystem ist in diesem Sinne ein extrem empfindliches Detektionssystem, das auch unter schwierigen Lichtverhältissen im offenen Gelände mit Büschen zuverlässig arbeitet.

Um die Emission der bereits beschriebenen Infrarot-Laser optimal detektieren zu können, wären entsprechende Infrarot-Detektoren sehr wichtig in einem Detektionssystem für das Freund-Feind-Erkennungssystem. Sogenannte PIN-Photodioden bestehen aus einer p-sowie einer n-dotierten Zone, die beide durch eine Zone nicht dotierten, intrinsischen Materials getrennt sind. Diese Photodioden sind üblicherweise so entworfen, dass der grösste Teil der einfallenden Strahlung in der nicht dotierten, intrinsischen Region absorbiert wird, wodurch sichergestellt ist, dass alle durch das Licht erzeugten Ladungsträger vom internen elektrischen Feld der Photodiode erfasst werden und zum Photostrom beitragen. Da die nicht dotierte intrinsische Zone, die positive und negative Raumladungszone trennt, weist eine PIN-Photodiode gegenüber einer PN-Photodiode ausserdem eine geringere Kapazität auf, wodurch die Reaktionszeit eines Detektionssystems sehr kurz wird. Eine kurze Reaktionszeit des Detektors ist aber ideal in Freund-Feind-Erkennungssystemen, welche auf der Übertragung hoher Raten kurzer Impulse basieren.

PIN-Photodioden sind aufgrund ihrer hervorragenden Stabilität gegenüber Umwelteinflüssen sowie ihrer Einsetzbarkeit in einem weitenTemperaturbereich gut für den Gebrauch in im offenen Gelände verwendeten Freund-Feind-Erkennungssystemen geeignet. Ein weiterer wichtiger Punkt für deren Anwendung in solchen Systemen ist ein minimaler Einfluss von Sonnenlicht auf das Detektionssystem. Mehrere Hersteller produzieren Photodioden mit direkt auf der Oberfläche des Chips angebrachten speziellen optischen Filtern, die unerwünschte spektrale Bereiche unterdrücken. Diese Filter können dazu verwendet werden,'einen Grossteil des Lichts der Sonne oder anderer in der Umgebung existenter störender Quellen, wie z.B. das von Strassenlaternen oder beweglicher Leuchten, zu eliminieren. Die Langzeitstabilität modemer PIN-Photodioden stellt sicher, dass kein messbarer Abfall ihrer Empfindlichkeit über deren Lebensdauer auftreten wird.

Da gepulste Laser inhärenten Jitter (die Periode zwischen zwei Pulsen ist nicht konstant), Fluktuationen der Pulsleistung (typischerweise mehrere Prozente) sowie grosse Schwankungen der Pulsdauer (oft um 50%) aufweisen, existieren nur begrenzte Möglichkeiten zur Detektion und zur Erzielung einer hohen Empfindlichkeit. Der Gebrauch.von kontinuierlich emittierenden Lasem wird deshalb in Freund-Feind-Erkennungssystemen vorgezogen. Wie aus der mit dieser Anmeldung zusammenhängenden Anmeldung "Continuous Wave Laser Battlefield Simulation System" mit der Seriennummer 08/565,960 ersichtlich, welche hier als Referenz angegeben wird, erlaubt die Verwendung von PPM (Puls-Positions-Modulation) und PCM (Puls-Code-Modulation) als Verfahren zur Codierung "lock in" und andere Detektionsmethoden zur Erzielung einer hohen Empfindlichkeit. Die Lichtquelle emittiert ein Signal mit durch die Genauigkeit von Quarzoszillatoren gewährleistetem zeitlichem Verlauf, wobei der Empfänger ebenfalls mit Schwingquarzen der entsprechenden Frequenzen ausgerüstet ist. Durch Verwendung von kontinuierlich emittierenden Lasern werden Empfindlichkeiten realisiert, die mit gepulsten Systemen nicht erreichbar sind. Diese liegen mit der hier beschriebenen Erfindung im Nanowatt-Bereich. Dadurch wird eine extrem hohe effektive Reichweite ermöglicht und die Realisierung eines Systems erlaubt, welches absolute Sicherheit auch des ungeschützten Auges gewährleistet und dessen Nutzbarkeit durch Blätter, Nebel und Regen nicht wesentlich beeinträchtigt wird.

Das bereits erwähnte "Continuous Wave Laser Battlefield Simulation System" (SIMLAS) des Anmelders verwendet Laser und Leuchtdioden (LED-Light Emitting Diode) zur Simulation von Waffen einschliesslich, aber nicht beschränkt auf Gewehren, Pistolen, Handgranaten, Panzern und Landminen. In jedem Fall wird die Waffe normalerweise durch den Soldaten angewendet und deren Wirkung durch einen Lichtstrahl so realistisch wie möglich dargestellt, sei es diejenige eines Gewehr- oder Pistolengeschosses, einer explodierenden Handgranate usw. Alle Teilnehmer einer solchen Übung (sowohl Personen als auch Objekte wie z. B. Panzer, Flugzeuge, Geländefahrzeuge, Lastwagen usw.) sind mit Detektoren ausgestattet, die eine mögliche Waffeneinwirkung auf den Teilnehmer (wie z. B. einen direkten oder beinahe erzielten Treffer) registrieren.

Die Laser-Lichtquelle sendet beispielsweise einen schmalen Infrarot-Lichtstrahl, dessen Divergenz nur 0.2 mrad beträgt. Dadurch ergibt sich nach 100 m ein Strahldurchmesser von nur ca. 4 cm, weshalb dieser Laser zusammen mit Nachtsichtgeräten als Zielhilfe eingesetzt werden kann. Die Divergenz kann jedoch auch beispielsweise zwischen 0.1 und 5 mrad oder zwischen 0.2 und 2 mrad liegen. Montage und Abgleich des Lasers sind so dauerhaft ausführbar, dass das System die militärischen Normen bezüglich Erschütterungsfestigkeit erfüllt. Der in SIMLAS zur Anwendung kommende Laserlichtstrahl wird derart mit einem Code moduliert, dass sowohl die handelnde Person als auch der verwendete Waffentyp eindeutig identifiziert werden können. Durch den Gebrauch von nach wohldefinierten Regeln codierten Signalen kann SIMLAS alle Trainingsphasen simulieren, einschliesslich: (a) Registrierung direkter Treffer, beinahe erzielter Treffer, Verletzungen, Kampfunfähigkeit usw.; (b) Identifizierung von Truppen und ihres Status; (c) Aufnahme aller Ereignisse einschliesslich Zeit und handelnder Person; sowie (d) Zusammenstellung von leistungsbezogenen Daten einzelner Personen oder von Gruppen. Zur Erfüllung dieser Aufgaben werden in SIMLAS kontinuierlich emittierende Laserdioden verwendet. Der Lichtstrahl wird in PCM und PPM codiert, da diese Modulationsarten hohe Genauigkeit mit hoher Empfindlichkeit und Immunität gegen Störsignale und Rauschen vereinen. Die Wirkungsweise von SIMLAS stellt die technischen Grundlagen des Freund-Feind-Erkennungssystems nach der vorliegenden Erfindung dar.

### Zusammenfassende Beschreibung der Erfindung

Es ist daher Aufgabe der Erfindung, ein Laseridentifikationssystem zu schaffen, mit dem die Nachteile des Standes der Technik vermieden werden, indem eine einfache und sichere Datenübermittlung zwischen einem Lasergerät und einer Zielvorrichtung erreicht werden kann.

Diese Aufgabe wird in vorteilhafter Weise erfindungsgemäss durch ein Laseridentifikationssystem nach Patentanspruch 1 gelöst.

Andere vorteilhafte Ausführungen der Erfindung ergeben sich aus den weiteren abhängigen Ansprüchen.

Nach der vorliegenden Erfindung führen somit "befreundete" Soldaten ein erfindungsgemässes auf der Waffe montiertes Systemgerät zur Beleuchtung eines Zieles mit sich und tragen auf ihren Körpern eine im Sinne der Erfindung dem Systemgerät zugehörige Gurtvorrichtung mit Sensoren, die bei beliebigen Simulations-Szenarien in Übungen und Gefechten Detektionsaufgaben für verschiedene Anwendungen erfüllen.

Das Systemgerät zur Beleuchtung des Ziels sendet einen modulierten Lichtstrahl gegen die Sensoren der Gurtvorrichtung eines anderen Soldaten. Der modulierte Lichtstrahl übermittelt eine Nachricht oder Meldung in Form eines flexiblen Protokolls, das in Abhängigkeit von der benötigten Information als ein beispielsweise zwischen 4 und 400 bit langes Datenpaket codiert ist, vorzugsweise jedoch bis 200 bit. Beispielsweise kann das Freund-Feind-Erkennungssystem nur auf der Übermittlung von vorzugsweise jeweils 16 bit basieren, während ein Freund-Feind-Erkennungssystem mit einer Simulationsoption 44 bits benötigen könnte. Der Code wird je nach der zu übertragenden Anzahl Bits innerhalb von 5 bis 70 ms übermittelt. Der Sensor interpretiert den Code, welcher nominell in Zonen zur Identifizierung des einzelnen Soldaten (16 bits), zur Identifizierung der verwendeten Waffe (4 bits) sowie zur Übermittlung der genauen Position (96 bits für alle drei durch einen GPS-Empfänger ermittelten Koordinaten) aufgeteilt ist. Der Bit-Code kann dann zur Erzeugung eines hochverschlüsselten Codes verwendet werden. Das codierte Signal kann aus Informationen bestehen zur Identifikation: (a) des einzelnen Soldaten, (b) eines täglich wechselnden Codes, (c) des Bataillon-Codes und (d) des Codes einer Synchronisation mit einer Mischung aus einem zeitabhängigen und einem speziellen Code. Das Kommunikationssystem hat folglich eine sehr grosse Informationsbandbreite und ist bis zu einer Übertragungsstrecke von 11.3 km äusserst empfindlich. Die hier beschriebene Erfindung kann vorzugsweise auf kurze etwa der Sichtbarkeit eines einzelnen Soldaten entsprechende Entfernungen angewendet werden, im algemeinen dient sie jedoch auch dem Aufbau von Verbindungen mit Soldaten, die sich jenseits der genannten Entfernung befinden.

### Kurze Beschreibung der Figuren

- **Fig.1**: zeigt ein auf einer Waffe montiertes Systemgerät nach der Erfindung.
- **Fig. 2**: zeigt die rückseitige Ansicht eines Systemgeräts nach Fig. 1.
- **Fig. 3**: zeigt die linksseitige Ansicht des Systemgeräts nach Fig. 1.
- **Fig. 4**: zeigt die rechtsseitige Ansicht des Systemgeräts nach Fig. 1.
- **Fig. 5**: zeigt eine schematische Darstellung zur Erläuterung der Arbeitsweise einer mit Sensoren ausgerüsteten Gurtvorrichtung des erfindungsgemässen Erkennungssystems, insbesondere im Fall eines teilweise verdeckten Ziels.
- **Fig. 6**: zeigt eine schematische Darstellung eines bevorzugten Niederspannungs-Lasers, insbesondere zur Verwendung in einem Laser-Zielbeleuchtungsteil des erfindungsgemässen Systemgeräts:
- **Fig. 7**: zeigt ein Blockschaltbild einer Sensorschaltung für die Sensoren einer solchen Gurtvorrichtung.
- **Fig. 8**: zeigt den inneren Bereich eines kapselförmigen Gehäuses eines Sensors und
- **Fig. 9**: einen Schnitt durch die Linie **IX - IX** in Fig. 8.

### Detaillierte Beschreibung der Erfindung

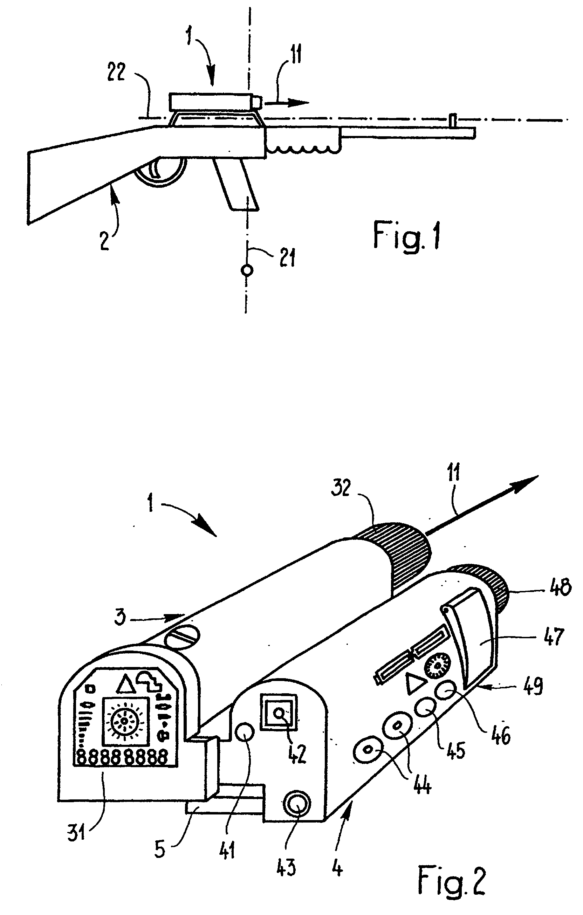

**Fig. 1** zeigt, wie ein Erkennungs-Systemgerät **1** nach der Erfindung derart auf einer Waffe **2** montiert **1** ist, dass die Schwerpunktlinie **21** der mit dem Lasergerät **1** ausgerüsteten Waffe das Lasergerät 1 selbst schneidet. Wie aus **Fig. 2** ersichtlich, umfasst das Lasergerät **1 (Fig. 1)** einen Laser-Zielbeleuchtungsteil **3,** einen Gehäuseteil **4,** in dem unter anderem für den Betrieb notwendige Batterien untergebracht sind, und eine Montierschiene **5,** die die Teile **3** und **4** miteinander verbindet. Die Teile **3** und **4** weisen teilweise zylindrische Partien auf, die derart parallel verlaufen, dass ein Soldat entlang einer Visierlinie **22 (Fig. 1) zwi**schen ihnen zielen kann. Eine Stimseite des Teils **3** weist ein Display-Fenster **31** in der Art eines Miniatur-Bildschirms auf, der zur Wiedergabe verschiedener Piktogramme für einige nützliche Informationen dient. Der Gehäuseteil **4** ist mit einem Leuchtpunkt **41,** einer Leuchtzone **42,** einer Befestigungshilfe **43** für eine Antenne, zwei Koaxanschlüssen **44,** je einem Bedienungsknopf **45, 46** und einem Schalter **47** versehen.

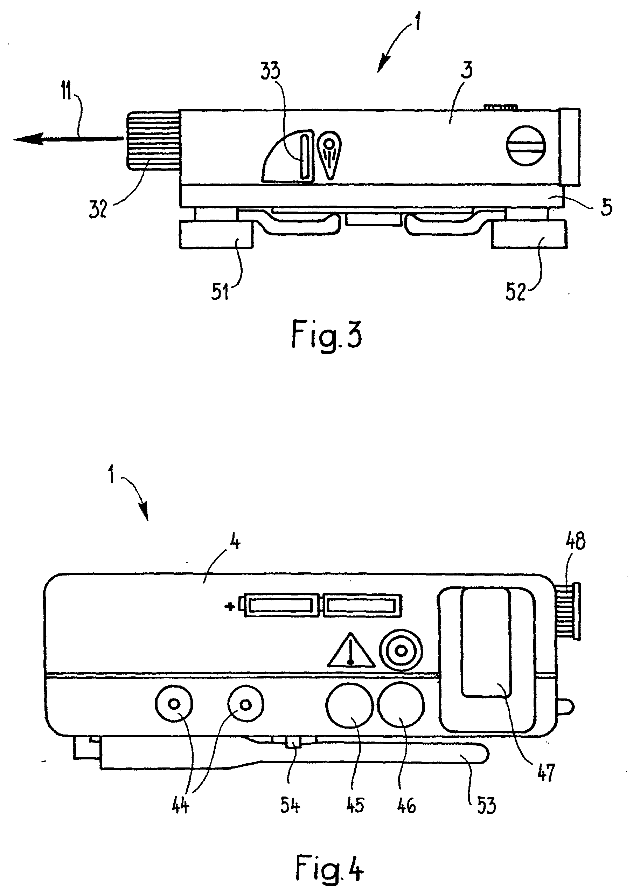

Aus den Figuren **2** und **3** ist ersichtlich, dass die vordere Partie des Teils **3** eine Laser-Optik **32** aufweist, die einen Laser-Strahl **11** abgeben kann. Wie in **Fig. 3** dargestellt, kann die Montierschiene **5** mit Erweiterungen **51, 52** versehen sein, die ein Montieren des Geräts **1** auf die Waffe **2** erleichtern. Im Teil **3** kann ein seitlicher Hebel **33** vorhanden sein, um durch Einfügung eines Hologramm-Plättchens derart eine Änderung der Laserstrahl-Charakteristik zu bewirken, dass beim Ziel der Strahldurchmesser ringförmig oder durch ringförmig verteilte Punkte erweitert wird.

**Fig. 4** zeigt einen Gehäuseteil **4** mit einer schwenkbaren Stabantenne **53** und mit einer Schnapp- oder Fixiereinrichtung **54** für diese Antenne **53.** An der vorderen Seite des Gehäuseteils **4** kann eine Empfängeroptik **48** vorhanden sein.

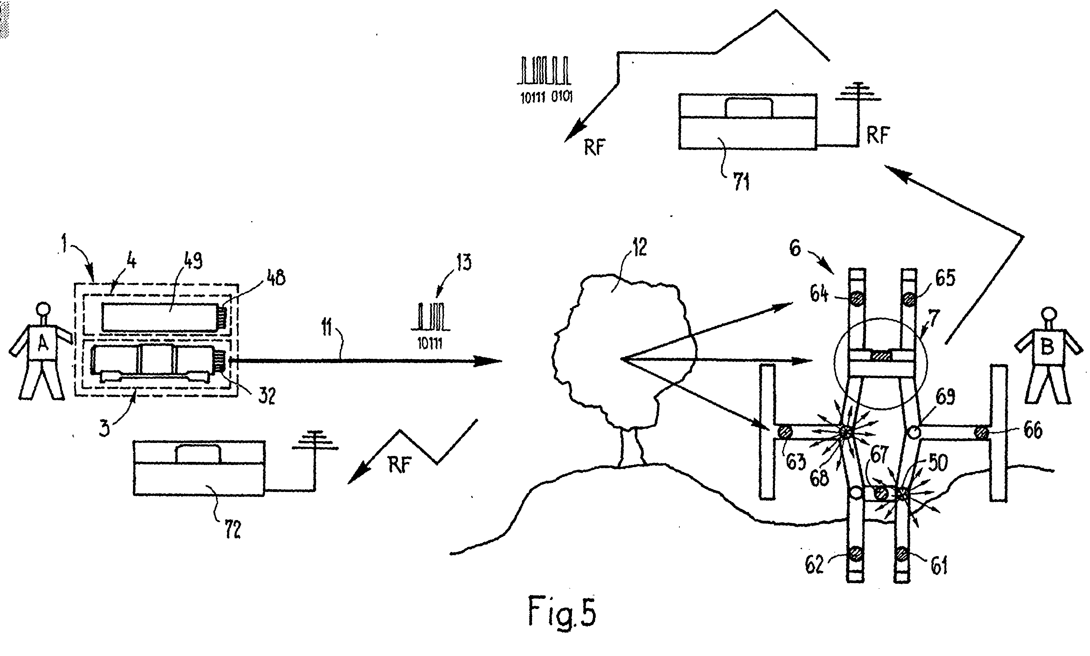

**Fig. 5** zeigt eine für die Ausrüstung von Soldaten vorgesehene Gurtvorrichtung **6** für Gefechtszwecke mit einer Vielzahl elektrischer bzw. elektronischer Komponenten. Eine Gurtvorrichtung dieser Art ist beispielsweise aus der DE - OS - 40 03 960 A1 bekannt. Die Gurtvorrichtung **6** nach **Fig. 5** trägt jedoch Sensoren **61, 62, 63, 64, 65**, **66, 67**, die vorzugsweise mit einer speziellen elektronischen Schaltung ausgerüstet sind. Zusätzlich trägt diese Gurtvorrichtung einen oder mehrere LED-Sender **68, 69** sowie eine Steuereinheit **7** gegebenenfalls mit einer Batterie. Im Beispiel nach **Fig. 5** befindet sich ein Hindernis, beispielsweise ein Busch **12,** zwischen dem Laser-Zielbeleuchtungsteil **3** in der Waffe eines ersten Soldaten A und der Gurtvorrichtung eines zweiten Soldaten **B.**

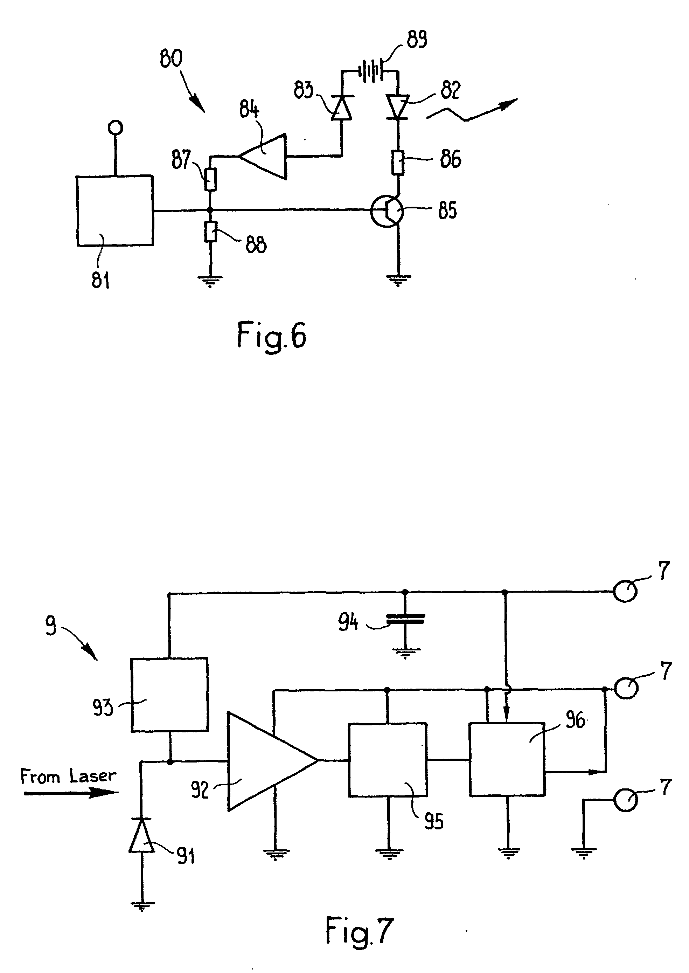

Der Niederspannungslaser nach **Fig. 6** ist an einen Modulator **81** angeschlossen und umfasst beispielsweise eine Laserdiode **82,** eine mit ihr gekoppelten Rückkopplungsdiode **83,** einen Operationsverstärker **84** und einen Transistor **85** sowie einige Widerstände **86, 87** und **88.** Die Anode der Diode **82** und die Kathode der Diode **83** sind an eine Spannungsquelle **89,** beispielsweise eine Batterie von 3 bis 5 Volt, angeschlossen. Die Kathode der Diode **82** ist über die Reihenschaltung des Widerstands **86** und der Emitter-Kollektor-Strecke des Transistors **85** mit Erde verbunden. Zwischen der Anode der Diode **83** und der Basis des Transistors **85** ist der Verstärker **84** mit dem ihm nachgeschalteten Widerstand **87** eingefügt. Die Basis des Transistors **85,** die der Modulationseingang der Schaltung bildet, ist über den Widerstand **88** mit Erde verbunden. Als Erde kann selbstverständlich auch ein Referenzpotential dienen. Der Modulator umfasst eine Schaltung **81,** die nicht nur eine Codier-Funktion bewirkt, sondern auch eine Zerhackerfunktion oder Chopper-Funktion, um ein Lichtsignal der (Träger-) Frequenz ft bereits vor der Codierung, die mit einer Bitrate der Frequenz fd erfolgt, mit einer Chopper-Frequenz fz zu zerhacken.

Die Sensoren **61** bis **67** nach **Fig. 5** enthalten eine Sensorschaltung **9** nach **Fig. 7.** Die Schaltung **9** umfasst beispielsweise eine Detektor-Diode **91,** deren Kathode einerseits mit dem Eingang eines Verstärkers **92** und andererseits über eine Spule **93** mit dem einen Anschluss eines Kondensators **94** verbunden ist. Der Ausgang des Verstärkers **92** ist über ein Integrator-Filter **95** an einen Mikroprozessor **96** angeschlossen, dessen Ausgangssignale über Kabel zur Steuereinheit **7** geführt werden.

Das Freund-Feind-Erkennungssystem nach der vorliegenden Erfindung arbeitet unter zwei verschiedenen Umweltbedingungen in Abhängigkeit davon, ob der als Ziel vorgesehene Soldat sich im offenen Gelände oder in Deckung befindet. Wenn in einem Szenario mit offenem Gelände ein Soldat **A** einen Soldaten **B** identifizieren will, der sich nicht in Deckung befindet (in **Fig. 5,** wäre dies ohne Busch **12**), setzt er sein auf der Waffe montiertes Laser-Zielbeleuchtungsgerät 1 in Betrieb und "beschiesst" Soldat **B** mit einem Laserstrahl **11** aus dem Laser-Zielbeleuchtungsgerät **1.** Eine durch den Laserstrahl **11** transportierte codierte Nachricht **13** verlangt von Soldat **B**, sich zu identifizieren. Eine Gurtvorrichtung **6** auf Soldat **B** empfängt die codierte Nachricht **13,** welche sich aus einem beispielsweise 116 Bit umfassenden Signal von Soldat **A** zusammensetzt. Ein Sensor z.B. **63** auf der Gurtvorrichtung **6** von Soldat **B** erkennt das 116-Bit-Signal. Soldat **B** wird nun die mittels GPS gewonnenen Koordinaten von Soldat **A** erhalten, und ein LED-Sender **68** auf der Gurtvorrichtung **6** von Soldat **B** übermittelt einen Bestätigungscode. Der Bestätigungscode kann von der das System anwendenden Einheit beliebig ausgewählt werden. Er kann beispielsweise aus dem Namen von Soldat **B,** des Bataillons oder beliebigen anderen Begriffen bestehen.

Gemäss einer Ausführung der Erfindung ist Soldat **A** nicht nur mit einem Lasersender **3** ausgerüstet, sondern verfügt auch über einen gegebenenfalls im Teil **4** untergebrachten Laserempfänger mit einer Empfängeroptik **48,** welcher parallel zum Lasersender, das heisst zum Teil **3** montiert ist. Der Laserempfänger empfängt nun diffuses vom LED-Sender **68** ausgestrahltes Licht von Soldat **B.** Soldat **A** sendet einen Identifizierungscode, bis er die Bestätigung von Soldat **B** erhält. Sofern Soldat **B** der eigenen Partei angehört, sieht Soldat **A** ein rotes Alarmsignal im Leuchtpunkt **41** und/oder in der Leuchtzone **42,** das ihm die Bekämpfung von Soldat **B** untersagt. Dieses Alarmsignal erscheint derart im System, dass es nur von Soldat **A** und nicht vom Feind eingesehen werden kann.

Soldat **A** empfängt zwar das Bestätigungssignal beispielsweise über die Ermpfängeroptik **48** im LED-Empfänger **49** seines Geräts **1,** ein entsprechendes Zielbeleuchtungsgerät **3** des Lasergeräts **1** von Soldat **B** wird jedoch nicht als Infrarotsender benutzt, um das Bestätigungssignal zu Soldat **A** zurückzusenden, weil das Laser-Zielbeleuchtungsgerät **3** einen zu scharf gebündelten Lichtstrahl aussendet. Dieser eng, vorzugsweise in einem Winkel von etwa 0.5 mrad ausgerichtete Lichtstrahl könnte das Bestätigungssignal nicht zu Soldat **A** zurücksenden, da Soldat **B** nicht notwendigerweise die Position von Soldat **A** kennt. Daher wird zur Rücksendung des Bestätigungscodes ein Hochleistungs-LED-Sender **68** (LED-Light Emitting Diode) verwendet, der auch auf der Gurtvorrichtung **6** von Soldat **B** angebracht ist. Dieser LED-Sender **68** strahlt seine Lichtleistung in einen viel grösseren Raumwinkel ab, weshalb die Bestätigung von Soldat **B** unter allen Umständen durch Soldat **A** empfangen werden kann. Solange Soldat **A** den Soldaten **B** sehen kann, ist er in der Lage, das Bestätigungssignal zu empfangen.

Da das Kampfgeschehen zunehmend bei schlechten Lichtverhältnissen stattfindet, wird es zunehmend üblich, am Kampfgeschehen teilnehmende Soldaten mit Nachtsichtbrillen auszurüsten. Sofern dies der Fall ist, wird die Waffe **1** üblicherweise vom Soldaten im Hüftanschlag geführt. Der Beobachtungs- und Zielvorgang geschieht entlang des Laserstrahls **11,** der durch Nachtsichtbrillen (nicht dargestellt) sichtbar ist. Infolge der Hüftposition der Waffe **1** ist das rote Alarmsignal (**41** und/oder **42**) für den die Waffe **1** führenden Soldaten nicht sichbar. Da jedoch das Laser-Zielbeleuchtungsgerät **3** durch einen Mikroprozessor gesteuert wird, ist es leicht möglich, den Laserstrahl **11** anstatt oder zusätzlich zum roten Alarmsignal wechselweise ein- und auszutasten. Der mit einer Nachtsichtbrille ausgerüstete Soldat kann schnell und leicht das Alarmsignal über den Laserstrahl erfassen und so den beleuchteten Soldaten als der eigenen Partei angehörend identifizieren.

Sofern der beleuchtete Soldat sich in Deckung befindet, beispielsweise hinter einem Busch **12** verborgen, kann der Soldat **A** den Körper von Soldat **B** nur teilweise sehen. Soldat **A** schiesst wieder mit dem Laserstrahl **11** wie oben beschrieben. Die Gurtvorrichtung **6** von Soldat **B** wird den Laserstrahl von Soldat **A** trotzdem detektieren, weil das Gesamtsystem eine ausreichende Empfindlichkeit für diese Anwendungsart besitzt, beispielsweise dadurch, dass die Sensoren **61, 62, 63,** .... je mit einer speziellen Elektronik ausgerüstet sind, die von einer gemeinsamen Batterie oder gegebenenfalls auch von je einer einzelnen kleinen Batterie gespeist werden kann. Das Hauptproblem besteht darin, dass der LED-Sender **68** von Soldat **B** durch den Busch **12** vollständig abgeschirmt sein kann und Soldat **A** die Antwort von Soldat **B** nicht empfängt. Nur direkt vom LED-Sender **68** stammendes Licht kann von Soldat **A** empfangen werden, weil das Licht diffus und nicht gerichtet abgestrahlt wird. Wenn Soldat **A** innerhalb einer Zeitspanne **Ta** von beispielsweise 100 ms nach Aussendung des Laserstrahls keine Bestätigung erhält, Soldat **B** aber offensichtlich in der Lage wäre, Nachrichten von Soldat **A** zu empfangen, wird dem Soldaten **B** eine zweite Chance eingeräumt durch Aussendung einer Impulsfolge über eine auf der Gurtvorrichtung **6** angebrachte Funkeinheit **71,** die einen Radiosender oder Radio-Sender/Empfänger umfassen kann, eine Bestätigung zu übermitteln. Dieses Radiosignal kann von Soldat **A** unter allen denkbaren Umständen empfangen werden, soll aber wegen seiner Verwundbarkeit gegenüber feindlichen Abwehrmassnahmen nur im Falle des Versagens anderer Mittel verwendet werden. Feindliche Kräfte könnten ausserdem durch Aussendung derartiger Radiosignale bewirken, dass eigene Soldaten verfolgt werden. Falls es sich beim Soldaten **B** um einen Feind handelt, wird in beiden oben beschriebenen Szenarien keine Antwort auf die durch den Laserstrahl von Soldat **A** erfolgten Abfrage erfolgen.

Nach einer Zeitspanne **Tb** wird der Lasersender **3** von Soldat **A** seinen Betrieb aussetzten, und eine in das System eingebaute mit einer Antenne **53** versehene Funkeinheit **72** wird vorsichtshalber eine beispielsweise **Tc** = 1 ms lang dauernde Pulsfolge zur Identifikationsabfrage aussenden. Die Zeitspanne **Tb** kann beispielsweise zwischen 1 ms und 1 s liegen, vorzugsweise jedoch 100 ms sein, und für diese Pulsfoge kann **Tc** etwa gleich oder grösser als 0.1 ms, vorzugsweise ca. 1 ms oder grösser, gewählt werden. Die Funkeinheit **72** kann ebenfalls einen Radiosender oder einen Radio-Sender/Empfänger umfassen. Diese Pulsfolge kann unter allen denkbaren Umständen über eine Distanz von mehreren Kilometern empfangen werden. Wenn nach dieser zweiten Übermittlung in einem Funkkanal keine Antwort erfolgt, wird das System das beleuchtete Ziel als feindliches Objekt identifizieren. Insgesamt ist für diesen Vorgang eine Zeit von 200 ms erforderlich. Wenn Soldat **A** eine Nachtsichtbrille trägt, wird er durch die Nachtsichtbrille den kontinuierlich ausgesendeten Laserstrahl sehen, der einen beleuchteten Soldaten als Feind kennzeichnet.

Die Sensoren **61, 62, 63,** ... sind vorzugsweise in Form von runden Scheiben ausgebildet, und zwar mit einer derart relativ hohen Dicke, dass sie nicht nur auf der Oberfläche, sondern auch seitlich, das heisst an der Peripherie der Scheibe laserstrahlempfindlich sind. Dies bedeutet, dass der Detektor **91** (**Fig. 7**) in einer entsprechenden Form auch über die zylindrische Fläche der Scheiben verteilt ist. Der Laserstrahl ist wie weiter oben erwähnt gechoppt, so dass der Detektor **91** eine intermittierende Strahlung detektiert, die er mit Hilfe des durch die Spule **93** und den Kondensator **94** gebildeten Resonanzkreises in einen Wechselstrom derselben Frequenz fz umwandelt. Die sich daraus ergebende Wechelspannung am Eingang des Verstärkers **92** wird durch diesen sehr stark verstärkt. Das Ausgangssignal des Verstärkers **92** wird dem Integrator-Filter **95** zugeführt, das dem Mikroprozessor **96** die codierten Signale zur Auswertung abgibt. Daraus ausgewertete Signale werden dann vom Mikroprozessor **96** an die Steuereinheit **7** geliefert. Die Impulsbreite der ausgestrahlten gechoppten Laserimpulse liegt beispielsweise zwischen 10 ns und 100 µs und vorzugsweise zwischen 0.1 und 10 µs. Die Breite eines tnformations-Bit-lmpulses entspricht vorzugsweise der Breite einer Anzahl von 3 bis 50 gechoppten Laserimpulse.

Gemäss einer anderen Ausführung der Erfindung kann zur Auslösung des Lasergeräts statt eines der Bedienungsknöpfe **45** oder **46** sonst auch ein nicht dargestellter Hebel dienen.

Der obere Teil des Lasergeräts bildet vorzugsweise zwei halbzylindrische parallele Kammern, wobei der zwischen diesen Kammern vorhandene Spalt ungehindert Sicht auf das Ziel erlaubt. Da dieser Spalt genug breit ist, kann in weiterer Ausgestaltung der Erfindung ein Leuchtpunkt gerade seitlich in diesem Spalt untergebracht sein, und zwar vorzugsweise im Endbereich des Spalts, wo der Lichtstrahl ausgestrahlt wird, derart, dass der Soldat gleichzeitig das Ziel und diesen Leuchtpunkt sehen kann. Das Lasergerät emittiert Licht vorzugsweise bei eine Wellenlänge im Bereich zwischen 780 und 905 nm, beispielsweise von 820 nm, und zwar beispielseise mit einer Ausgangsleistung in der Grössenordnung von 50 mW. Wird die Laser-Lichtquelle mit dem holographischen Gitter betrieben, wodurch der austretende Lichtstrahl eine Divergenz von beispielsweise 10 mrad aufweisen kann, beträgt die Reichweite ungefähr 2 km, ohne holographisches Gitter aufgrund der reduzierten Divergenz von 0.2 mrad hingegen mehr als 10 km. Der Zielvorgang wird bei Distanzen von weniger als 2 km durch das eingefügte holographische Gitter erleichtert.

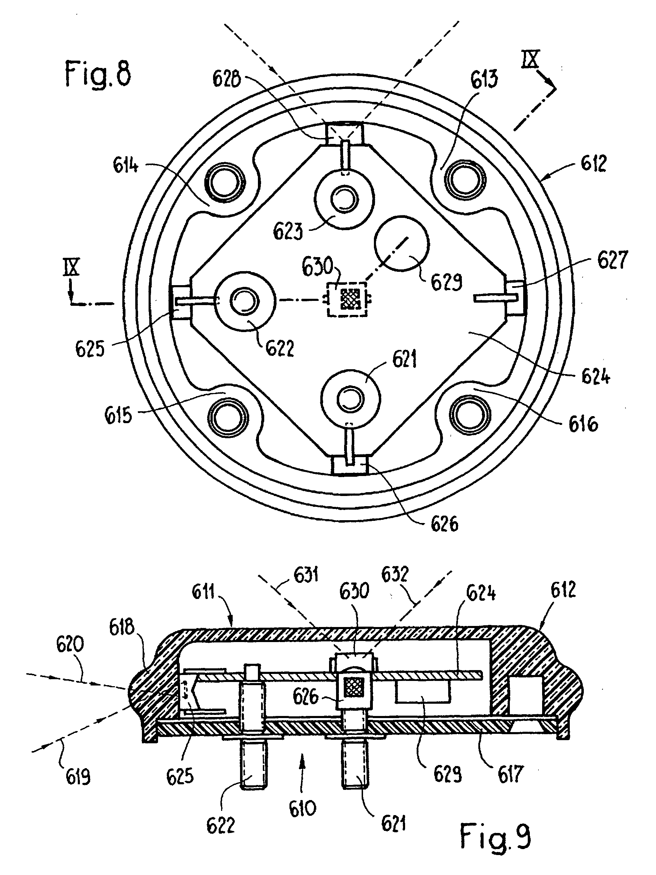

**Fig. 8** zeigt den inneren Bereich eines kapselförmigen Gehäuses **610** eines Sensors **61, 62, 63,** ... (**Fig. 5**) und **Fig. 9** einen Schnitt durch die Linie **IX - IX** in **Fig. 8.** Das Gehäuse **610** weist einen vorzugsweise flach ausgebildeten Boden **611** und eine ringförmige Wand **612** auf. Im Innern hat das Gehäuse **610** vier Erweiterungen **613, 614, 615** und **616** (**Fig. 8**) mit Gewindelöchern für die Befestigung einer Platine **617**, die als Printplatte ausgebildet sein kann. Nach aussen ist das Gehäuse **610** mit einer peripherischen Verdickung **618** versehen, die wie eine toroidale Lupe oder Sammellinse für die einfallende Laserstrahlung **619, 620** wirkt, weil das Gehäusematerial transparent bzw. lichtleitend für die verwendete Laserstrahlung ist. An der Platine **617** sind vorzugsweise drei Befestigungselemente **621, 622, 623** angeordnet, die sich bis relativ weit in den inneren Bereich des Gehäuses erstrecken und dort eine Printplatte **624** halten, die mehrere Photosensoren **625, 626, 627, 628** und einen Mikroprozessor **629** oder gegebenenfalls nur einen Diskriminator trägt. Die Befestigungseiemente **621, 622, 623** können zugleich als elektrische Anschlüsse dienen, um bereits diskriminierte Signale über Leitungen an die Steuereinheit **7** (**Fig. 5**) zu führen.

Die Photosensoren **625, 626,** ... sind derart im Innern des Gehäuses angeordnet, dass ihre empfindlichen Seiten jeweils flach an den inneren vorzugsweise zylindrischen ringförmigen Wandpartien anliegen, die sich zwischen den Erweiterungen **613, 614, 615** und **616** befinden, um die empfangene durch die Verdickung geführte Laserstrahlung detektieren zu können. Im Zentrum der Printplatte **624** befindet sich mindestens ein weiterer Photosensor **630,** dessen empfindliche Seite gegen den Boden **611** des Gehäuses gerichtet ist und sich daher für die Detektierung von Laserstrahlen **631, 632** eignet, die mit einer grösseren Neigung zur Fläche des Bodens **611** einfallen als die Laserstrahlen **620** und **619,** die sich fast parallel zu dieser Bodenfläche fortpflanzen.

Im Gehäuse **610** sind vorzugsweise nebst dem individuellen Mikroprozessor **629** oder (**Fig. 7**) oder Diskriminator auch ein individueller Vorverstärker **92** und ein Integrator-Filter **95** untergebracht, um als individuelle Mittel aus einer empfangenen gechoppten Laser-Strahlung ein alternierendes elektrisches Signal zu gewinnen und das bereits diskriminierte Signale über Leitungen an die Steuereinheit **7** zuzuführen. In der Printplatte **624** kann beispielsweise die Spule **93** und/oder der Kondensator **94** untergebracht oder dort integriert sein, die als Sensor-Mittel den Resonanzkreis bilden. Der Diskriminator und/oder der Mikroprozessor können ausgebildet sein, um aus der empfangenen Laserstrahlung nur Signale mit einer erwarteten Codierung auszufiltern.

Die Sensoren nach **Fig. 8** und **9** sind demzufolge in Form von runden Scheiben mit dem sich aus der Figur ergebenden Durchmesser/Dicke-Verhältnis ausgebildet. Die einfallende Laserstrahlung kann sich im Körper von Soldat **B** reflektieren und seitlich, beispielsweise als Laserstrahlung **619** oder **620** (**Fig. 9**), durch die periphere Verdickung **618** zur Strahlungsempfindlichen Seite des Photosensors **625** gelangen. Bei Verwendung einer für das menschliche Auge unsichtbare Infrarot-Laserstrahlung kann das Gehäuse **610** für normales Licht undurchsichtig sein, und zwar beispielsweise farbig oder schwarz.

Die oben dargelegten Ausführungsbeispiele sind lediglich als Veranschaulichung der Anwendung eines solchen Systems zu verstehen, das auch für Simulationszwecke einsetzbar ist. Andere sich für Fachleute sofort daraus ergebende Ausführungen beinhalten jedoch auch die Grundgedanken der Erfindung.

## Patentansprüche

1. Laseridentifikationssystem mit mindestens einem Lasergerät (**1**) zur Identifizierung von wenigstens einer Zielvorrichtung (**6**),
- wobei das Lasergerät (**1**),
- dazu ausgebildet ist, eine eng gebündelte Laserstrahlung in einer Trägerfrequenz (**ft**) auszusenden,
- Codiermittel (**81**) aufweist, um eine Codierung der Laserstrahlung in einer Codier-Bitrate (**fd** ) durchzuführen, und
- Zerhacker-Mittel (**81**) umfasst, um die Laserstrahlung (**11**) mit mit einer vorgegebenen Chopper-Frequenz (**fz**) zu choppen,
- derart, dass die auszusendende eng gebündelte Laserstrahiung nicht nur codiert sondern auch geschoppt ist,
- wobei die Zielvorrichtung (**6**)
- Sensor-Mittel (**61 ... 67**) zur Detektierung dieser Laserstrahlung und Umwandlung derselben in elektrische Signale aufweist, die einem Diskriminator zugeführt werden, welche Sensor-Mittel (**61 ... 67**) der Zielvorrichtung (**6**) Mittel umfassen, um aus der empfangenen codierten und gechoppten Laserstrahlung ein alternierendes elektrisches Signal zu gewinnen, das einem Vorverstärker zugeführt wird, der dem Diskriminator vorgeschaltet ist, sowie
- Sender-Mittel umfasst, um nach Massgabe von im Diskriminator getroffenen Entscheidungen Rückmeldungen an Empfänger-Mittel, die sich innerhalb oder ausserhalb des Lasergeräts (**1**) befinden, zurückzusenden, welche Sender-Mittel (**68; 69**) der Zielvorrichtung (**6**)
- dazu ausgebildet sind, eine Laserstrahlung in einem grossen Raumwinkel zu senden, und
- weitere Zerhacker-Mittel aufweisen, um eine Laserstrahlung auszusenden, die nicht nur codiert, sondern auch mit einer vorgegebenen Frequenz gechoppt ist, und
- wobei das Lasergerät (**1**) einen weiteren Diskriminator sowie Sensor-Mittel umfasst, um aus der empfangenen gechoppten Laserstrahlung ein alternierendes elektrisches Signal zu gewinnen, das einem weiteren Vorverstärker zugeführt wird, der diesem Diskriminator vorgeschaltet ist,
**dadurch gekennzeichnet,**
**dass** das Lasergerät (**1**) und die Zielvorrichtung (**6**) je einen Mikroprozessor und eine Funkeinheit (**72, 71**) aufweisen, derart, dass das Lasergerät (**1**), wenn es innerhalb einer Zeitspanne **Ta** nach Aussendung des eng gebündelten codierten und gechoppten Laserstrahls keine Rückmeldung von der Zielvorrichtung (**6**) erhält, eine weiteren Laserstrahlung mit einer anderen Codierung als die erstgenannte Laserstrahlung sendet, die veranlasst, dass die Funkeinheit der Zielvorrichtung (**6**) eine Bestätigung übermittelt, die von der Funkeinheit des Lasergeräts (**1**) empfangen werden kann.

2. Laseridentifikationssystem nach Anspruch 1,
**dadurch gekennzeichnet,**
**dass** die Sensor-Mittel des Lasergeräts (**1**) und/oder der Zielvorrichtung (**6**) einen Resonanzkreis (**93, 94**) umfassen, der gegebenenfalls auf die Chopper-Frequenz der empfangenen Laserstrahlung abgestimmt oder geregelt werden kann.

3. Laseridentifikationssystem nach einem der Ansprüche **1** bis **2,**
**dadurch gekennzeichnet,**
**dass** der Verstärkungsgrad des Vorverstäkers (**92**) des Lasergeräts (**1**) und/oder der Zielvorrichtung (**6**) für den Bereich der entsprechenden Chopper-Frequenz optimiert ist.

4. Laseridentifikationssystem nach einem der Ansprüche **1** bis **3,**
**dadurch gekennzeichnet,**
das Lasergerät (**1**), wenn es innerhalb einer Zeitspanne **Tb** nach Aussendung der gebündelten Laserstrahlung mit der zweiten Codierung keine Rückmeldung von der Zielvorrichtung (**6**) erhält, eine Meldung einer Dauer **Tc** über seine eigene Funkeinheit sendet in Erwartung einer Bestätigung via Funk von der Zielvorrichtung (**6**).

5. Laseridentifikationssystem nach einem der Ansprüche **1** bis **4**,
**dadurch gekennzeichnet,**
**dass** die modulierte Strahlung Meldungen in Form eines flexiblen Protokolls übermittelt, das in Abhängigkeit von der benötigten Information als ein zwischen 4 und 200 bit langes Datenpaket codiert ist, wobei vorzugsweise der Code je nach der zu übertragenden Anzahl von Bits innerhalb von 5 bis 70 ms übermittelt wird.

6. Laseridentifikationssystem nach einem der Ansprüche **1** bis **4**,
**dadurch gekennzeichnet,**
**dass** die Breite der ausgestrahlten gechoppten Laserimpulse zwischen 0.1 und 10 µs liegt, und dass die Breite eines Informations-Bit-Impulses vorzugsweise der Breite einer Anzahl von 3 bis 50 gechoppten Laserimpulse entspricht.

7. Lasergerät (**1**) für ein Laseridentifikationssystem nach einem der Ansprüche **1** bis **6**,
**dadurch gekennzeichnet,**
**dass** das Lasergerät (**1**)
- auf einer Waffe (**2**) montierbar ist und
- ein Laser-Zielbeleuchtungsteil (**3**) aufweist, das ausgestaltet ist, um eine eng gebündelte Laserstrahlung (**11**) auszusenden, sowie
- Zerhacker-Mittel (**81**) umfasst, um eine Laser-Strahlung (**11**) auszusenden, die nicht nur codiert, sondern auch mit einer vorgegebenen Frequenz gechoppt ist.

8. Zielvorrichtung (**6**) für ein Laseridentifikationssystem nach einem der Ansprüche **1** bis **6,**
**dadurch gekennzeichnet,**
**dass** die Zielvorrichtung (**6**) eine tragbare Gurtvorrichtung mit Sensor-Mitteln (**61, 62, 63, ...**) ist, die Abstimm-Mittel umfassen, um aus der empfangenen gechoppten Laser-Strahlung (**11**) ein altemierendes elektrisches Signal zu gewinnen, das einem einem Diskriminator (**95**) vorgeschalteten Vorverstärker (**92**) zugeführt wird.

9. Sensor für eine Gurtvorrichtung nach Anspruch **8,**
**dadurch gekennzeichnet,**
**dass** der Sensor ein kapselförmiges Gehäuse (**610**) mit einem Boden (**611**) und einer ringförmigen Wand (**612**) umfasst, dass das Gehäuse (**610**) wenigstens teilweise aus einem für die verwendete Laserstrahlung transparenten bzw. lichtleitenden Material ausgestaltet und mit einer peripherischen Verdickung (**618**) versehen ist, die in der Art einer Sammellinse für die einfallende Laserstrahlung (**619, 620**) wirkt, und dass Photosensoren (**625, 626,** ...) derart im Innern des Gehäuses angeordnet sind, dass ihre für die Laserstrahlung empfindlichen Seiten jeweils an innenseitigen vorzugsweise zylindrischen ringförmigen Wandpartien des Gehäuses anliegen, um eine durch die Verdickung geführte Laserstrahlung detektieren zu können.

10. Sensor nach Anspruch **9,**
**dadurch gekennzeichnet,**
**dass** in diesem Gehäuse nebst individuelle Mittel, um aus einer empfangenen gechoppten Laserstrahlung ein alternierendes elektrisches Signal zu gewinnen, auch ein individueller Vorverstärker und ein Diskriminator untergebracht sind, derart dass bereits diskriminierte Signale über Leitungen an eine Steuereinheit (**7**) Zentralstelle geführt werden.

## Claims

1. Laser identification system with at least one laser device (1) for identification of at least one target device (**6**),
- the laser device (**1**):
- being designed to transmit a densely bundled laser beam on a carrier frequency (**ft**),
- being provided with a coding device (**81**) to carry out coding of the laser beam in a coding bit-rate (**fd**), and
- including a chopping device (**81**) to chop the laser beam (**11**) at a preset chopper frequency (**fz**),
- so that the densely bundled laser beam to be transmitted is not only coded but also chopped,
the target device (**6**):
- being provided with sensor devices (**61-67**) to detect this laser beam and convert it into electrical signals which are fed into a discriminator, the sensor devices (**61-67**) of the target device (**6**) possessing means of obtaining from the coded and chopped laser beam received an alternating electric signal which is fed into a pre-amplifier connected in series with the discriminator, and in addition
- including means of transmission which, in accordance with decisions made in the discriminator, will send acknowledgements to receiving equipment located inside or outside the laser device (**1**), these means of transmission (**68, 69**) of the target device (**6**) being:
- designed to emit laser radiation over a wide angle, and
- provided with further chopping devices in order to emit a laser beam that is not only coded but also chopped at a preset frequency, and
- the laser device (**1**) incorporating a further discriminator and sensor devices in order to obtain from the chopped laser beam received an alternating electrical signal which is fed into an additional pre-amplifier connected in series with this discriminator,
**characterized in that**
the laser device (**1**) and the target device (**6**) are each provided with a microprocessor and a radio unit (**72, 71**), so that the laser device (**1**), if it does not receive from the target device (**6**) any acknowledgement of reception of the densely bundled, coded and chopped laser beam within a period of time Ta after transmission, transmits another laser emission with a different coding from that of the laser beam previously described, which causes the radio unit of the target device (**6**) to communicate a confirmation which can be received by the radio unit of the laser device (**1**).

2. Laser identification system according to Claim **1**
**characterized in that**
the sensor devices of the laser device (**1**) and/or the target device (**6**) include a resonance curve (**93, 94**) which may be determined on the basis of the chopper frequency of the laser beam received or can be adjusted to this.

3. Laser identification system according to one of Claims **1** to **2**
**characterized in that**
the degree of amplification of the pre-amplifier (**92**) of the laser device (**1**) and/or of the target device (**6**) is optimized for the band of the corresponding chopper frequency.

4. Laser identification system according to one of Claims **1** to **3**
**characterized in that**
the laser device (**1**), if within a period of time **Tb** after transmission of the bundled laser beam with the second code it does not receive any acknowledgement from the target device (**6**), sends a signal of duration Tc via its own radio unit in expectation of confirmation by radio from the target device (**6**).

5. Laser identification system according to one of Claims **1** to **4**
**characterized in that**
the modulated transmission communicates signals in the form of a flexible protocol which is coded as a function of the information required in the form of a data packet between 4 and 200 bits long, the code being preferably transmitted, as a function of the number of bits to be sent, within a period of 5 to 70 ms.

6. Laser identification system according to one of Claims **1** to **4**
**characterized in that**
the breadth of the chopped laser pulse emitted lies between 0.1 and 10 µs, and that the breadth of an information bit pulse should preferably correspond to the breadth of a number of between 3 and 50 chopped laser pulses.

7. Laser device (**1**) for a laser identification system according to one of Claims **1** to **6**
**characterized in that**
the laser device (**1**):
- can be mounted on a weapon (**2**) and
- is provided with a target illuminating device (**3**) equipped to send out a bundled laser beam (**11**), and also
- incorporates a chopping device (**81**) to send out a laser beam (**11**) which is not only coded but also chopped at a preset frequency.

8. Target device (**6**) for a laser identification system according to one of Claims **1** to **6**
**characterized in that**
the target device (**6**) is a wearable harness with sensor devices (**61, 62, 63, etc.**) which include a tuning device to obtain from the chopped laser beam (**11**) received an alternating electrical signal which is fed into a pre-amplifier (**92**) connected in series with a discriminator (**95**).

9. Sensor for a harness according to Claim **8**
**characterized in that**
the sensor possesses a blister shaped housing (**610**) with a floor (**611**) and a ring shaped wall (**612**), that the housing (**610**) is made at least in part of a material which is transparent or translucent to the laser radiation employed and has a thickening (**618**) round its periphery which acts as a concentrating lens for the incoming laser radiation (**619, 620**), and that photo-sensors (**625, 626, etc.**) are so arranged inside the housing that their laser radiation-sensitive sides are positioned against the inner surface of the preferably cylindrical ring-shaped wall part of the housing in order to be able to detect laser radiation entering through the thickening.

10. Sensor according to Claim **9**
**characterized in that**
inside this housing, in addition to individual means of obtaining an alternating electrical signal from a chopped laser beam received, an individual pre-amplifier and a discriminator are also provided, so that signals already discriminated are conducted through wires to a centrally positioned control unit (**7**).

## Revendications

1. Système d'identification par laser comprenant au moins un appareil laser (**1**) destiné à l'identification d'au moins un dispositif de cible (**6**),
- l'appareil laser (**1**)
- étant conçu de façon à émettre un rayonnement laser très focalisé dans une fréquence porteuse (**ft**),
- comportant des moyens de codage (**81**) afin d'effectuer un codage du rayonnement laser en débit binaire de codage (**fd**), et
- comprenant des moyens d'interruption périodique (**81**) afin de hacher le rayonnement laser (**11**) avec une fréquence de hachage (**fz**) prédéterminée,
- de sorte que le rayonnement laser très focalisé à émettre n'est pas seulement codé mais aussi haché,
- le dispositif de cible (**6**)
- comprenant des éléments capteurs (**61...67**) destinés à détecter ce rayonnement laser et à le transformer en signaux électriques qui sont amenés dans un discriminateur, les éléments capteurs (**61...67**) du dispositif de cible (**6**) comprenant des éléments qui permettent d'obtenir, à partir du rayonnement laser reçu codé et haché, un signal électrique alternant qui est amené à un préamplificateur placé en amont du discriminateur, et
- comprenant des éléments émetteurs destinés à renvoyer, conformément aux décisions prises dans le discriminateur, des messages de retour à des éléments récepteurs se trouvant à l'intérieur ou à l'extérieur de l'appareil laser (**1**), ces éléments émetteurs (**68 ; 69**) du dispositif de cible (**6**) - étant conçus pour émettre un rayon laser dans un vaste angle de l'espace, et
- comportant d'autres moyens d'interruption périodique destinés à émettre un rayonnement laser qui non seulement est codé, mais qui est aussi haché avec une fréquence prédéterminée, et
- l'appareil laser (**1**) comprenant un autre discriminateur ainsi que des éléments capteurs, qui permettent d'obtenir, à partir du rayonnement laser haché reçu, un signal électrique alternant qui est amené à un autre préamplificateur placé en amont de ce discriminateur,
**caractérisé en ce que**
l'appareil laser (**1**) et le dispositif de cible (**6**) comportent chacun un microprocesseur et une unité radio (**72, 71**), de sorte que, lorsque l'appareil laser (**1**) ne reçoit pas, de la part du dispositif de cible (**6**), de message de retour dans un laps de temps **Ta** après l'émission du faisceau laser très focalisé, codé et haché, il envoie un autre rayonnement laser avec un autre codage que le rayonnement mentionné en premier, ce qui fait que l'unité radio du dispositif de cible (**6**) transmet une confirmation pouvant être reçue par l'unité radio de l'appareil laser (**1**).

2. Système d'identification par laser conforme à la revendication **1**,
**caractérisé en ce que**
les éléments capteurs de l'appareil laser (**1**) et/ou du dispositif de cible (**6**) comprennent un circuit résonnant (**93, 94**) qui peut éventuellement être syntonisé ou réglé sur la fréquence de hachage du rayonnement laser reçu.

3. Système d'identification par laser conforme à l'une des revendications **1** à **2**,
**caractérisé en ce que**
le degré d'amplification du préamplificateur (**92**) de l'appareil laser (**1**) et/ou du dispositif de cible (**6**) est optimisé pour la zone de la fréquence de hachage correspondante.

4. Système d'identification par laser conforme à l'une des revendications **1** à **3,**
**caractérisé en ce que**
l'appareil laser (**1**), lorsqu'il ne reçoit pas, de la part du dispositif de cible (**6**), de message de retour dans un laps de temps **Tb** après l'émissio du faisceau laser très focalisé soumis au deuxième codage, envoie un message dune durée **Tc** par l'intermédiaire de sa propre unité radio en attendant du dispositif de cible (**6**) une confirmation par radio.

5. Système d'identification par laser conforme à l'une des revendications **1** à **4**,
**caractérisé en ce que**
le rayonnement modulé transmet des messages sous forme d'un protocole souple qui, en fonction des informations nécessaires, est codé en un paquet de données d'une longueur de 4 à 200 bits, le code étant de préférence transmis, selon le nombre de bits à transférer, en 5 à 70 ms.

6. Système d'identification par laser conforme à l'une des revendications **1** à **4**,
**caractérisé en ce que**
la largeur des impulsions laser hachées émises oscille entre 0,1 et 10 µs, et **en ce que** la largeur dune impulsion de bit d'information correspond de préférence à la largeur de 3 à 50 impulsions laser hachées.

7. Appareil laser (**1**) destiné à un système d'identification par laser conforme à l'une des revendications **1** à **6**,
**caractérisé en ce que**
l'appareil laser (**1**)
- peut être monté sur une arme (**2**) et
- comporte un élément laser d'illumination de cible (**3**) conçu de façon à émettre un rayonnement laser (**11**) très focalisé, et
- comprend des moyens d'interruption périodique (**81**) destinés à émettre un rayonnement laser (**11**) qui est non seulement codé, mais aussi haché avec une fréquence prédéterminée.

8. Dispositif de cible (**6**) destiné à un système d'identification par laser conforme à l'une des revendications **1** à **6**,
**caractérisé en ce que**
le dispositif de cible (**6**) est un dispositif à sangles portatif muni d'éléments capteurs (**61**, **62**, **63**,...) comportant des moyens de réglage, ce qui permet d'obtenir, à partir du rayonnement laser haché (**11**) reçu, un signal électrique alternant qui est amené à un préamplificateur (**92**) placé en amont d'un discriminateur (**95**).

9. Capteur destiné à un dispositif à sangles conforme à la revendication **8,**
**caractérisé en ce que**
le capteur comprend un boîtier en forme de capsule (**610**) avec un fond (**611**) et une paroi annulaire **(612)**, **en ce que** le boîtier (**610**) est constitué, au moins partiellement, d'un matériau transparent à ou conduisant la lumière du rayonnement laser employé et comporte un épaississement périphérique (**618**) fonctionnant comme une lentille convergente pour le faisceau laser incident (**619, 620**), et **en ce que** des capteurs optiques (**625, 626, ...**) sont placés de telle manière, à l'intérieur du boîtier, que leurs faces sensibles au rayonnement laser touchent respectivement les parties de la paroi du boîtier, annulaires et de préférence cylindriques, placées sur la face interne, afin de pouvoir détecter un rayonnement laser passant à travers l'épaississement.

10. Capteur conforme à la revendication **9**,
**caractérisé en ce que**
sont également placés dans ce boîtier, en plus d'éléments individuels destinés à obtenir un signal électrique alternant à partir d'un rayonnement laser haché reçu, un préamplificateur individuel et un discriminateur, de sorte que des signaux déjà discriminés sont amenés par des circuits à une unité de commande (7) d'un point central.
